# EUROPEAN PATENT APPLICATION

(11) **EP 1 840 808 A1**
(43) Date of publication of application: **03.10.2007**
(21) Application number: 07001550.8
(22) Date of filing: 25.01.2007
(51) Int. Cl.: G06Q 10/00

(54) **Presence logging in calendar systems**

(30) Priority: 31.03.2006 US 394748
(71) Applicant: Alcatel Lucent, 75008 Paris (FR)
(72) Inventor: Jachner, Jack, MA 02420 Lexington (US)
(74) Representative: Schäfer, Wolfgang

(57) **Abstract**

Presence information (180) of presentities (110) is logged in a calendar system using a presence logging calendar connector (200). A presence server (160) collects and stores presence information (180) on a presentity (110). The presence logging calendar connector (200) is in communication with the presence server (160) via a presence protocol to receive the presence information (180) in a presence format. The presence logging calendar connector (200) is operable to convert the presence information (180) into one or more calendar entries (210) in a calendar format. The presence logging calendar connector (200) is further in communication with a calendar server (230) within the calendar system via a calendar protocol to log the calendar entries (210) in a presence log (240) maintained by the calendar server (230).

## Description

### BACKGROUND OF THE INVENTION

### Technical Field of the Invention

The present invention relates in general to a presence-based communication system, and in particular, to logging presence information in calendar systems.

### Description of Related Art

Presence-based interactive communication systems enable presentities (e.g., users, services and/or equipment) to publish, in real-time, their presence information, such as the availability and current status of the presentity devices/applications, to presence watchers (e.g., users, services and/or equipment). Presence systems typically incorporate presence servers to manage the presence information for a plurality of presentities. Presence servers currently automatically receive updated presence information from various presence sources, such as telephone applications or instant messaging applications, and aggregate the received presence information to reflect the presence state of the presentities. For example, when a presentity initiates or receives a voice call on his or her desktop phone, the presence server is notified and changes the presence state of the presentity to "On the Phone."

Another source of presence information is calendar/scheduler applications. Calendar/scheduler applications are used frequently to plan and schedule various activities, such as meetings, phone calls, business trips, personal time and other user events. Thus, a calendar/scheduler application is capable of providing a user's day to day agenda with a high level of accuracy. In enterprise applications, each calendar/scheduler application is normally associated with a calendar server, such as the Microsoft Exchange Server®, IBM Domino Server® or Meeting Maker® server. The calendar server maintains the schedules of all users within the enterprise that use that calendar service. As a result, the data stored in the server databases can be provided to the presence server to gather rich calendar presence information, such as current availability, location, predicted availability, etc.

Presence servers further provide the current presence state of presentities to watchers of the presentities. The current presence state can be used, for example, to assist the watchers in establishing real-time voice, text and/or multimedia communication sessions with the presentities. Typically, the presence server interfaces with a presence user client on a watcher terminal (e.g., desktop phone, cell phone, PDA, desktop computer, laptop computer, etc.) to provide the current presence state of one or more presentities to a particular watcher. For example, the watcher terminal can include a display and a graphical user interface for displaying the real-time presence information of presentities within, for example, a buddy list of the watcher.

However, current presence user clients are only capable of displaying the current, real-time presence state of a presentity in the form of text and/or icons. As such, presence user clients are poorly suited to present the time evolution of presence states of a presentity, as for example, a presence log. A presence log can be a valuable record of past activity and presence state(s) of the presentity. Therefore, what is needed is a system for logging presence information of presentities to create a time log of past presence states of the presentities. In addition, what is needed is a system for enabling watchers to view the presence log in a standardized and familiar format.

### SUMMARY OF THE INVENTION

Embodiments of the present invention provide a system for logging presence information of presentities in a calendar system. The system includes a presence server for collecting and storing presence information on a presentity and providing the presence information to one or more watchers of the presentity and a presence logging calendar connector in communication with the presence server via a presence protocol and a calendar server via a calendar protocol. The presence logging calendar connector is operable to convert presence information received from the presence server in a presence format into one or more calendar entries in a calendar format and to log the calendar entries in a presence log maintained by the calendar server.

In one embodiment, the presence information identifies presence states of the presentity, and the calendar entries collectively form a time log of the presentity presence states. In an exemplary embodiment, each of the calendar entries includes a presence state, an onset of the presence state and a duration of the presence state.

In a further embodiment, the presence log is stored in a calendar database in communication with calendar server, and the calendar entries are stored as presence log information within the presence log. In an exemplary embodiment, the presence log information includes an entry identifier, a presence state value, an onset value and a duration value for each of the calendar entries. In a further exemplary embodiment, the presence log information also includes indexes linking each of the entry identifiers to the respective presence state value, onset value and duration value. In an additional embodiment, the presence log information further includes presentity identities identifying each presentity associated with each calendar entry and indexes linking the entry identifiers to the respective presentity identities.

In another embodiment, the system includes a calendar client in communication with the calendar server to retrieve the presence log information associated with one or more of presentities to enable viewing of the retrieved presence log information in the calendar format.

Embodiments of the present invention further provide a method for logging presence information of presentities in a calendar system. The method includes creating a presence log for presentities in the calendar system, receiving presence information on the presentities and converting the presence information in a presence format into one or more calendar entries in a calendar format. The method further includes storing the calendar entries in the presence log.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary presence system for logging presence information of presentities in a calendar system, in accordance with embodiments of the present invention;
FIGURE 3A illustrates an exemplary format of a calendar entry in a presence log, in accordance with embodiments of the present invention;
FIGURE 3B illustrates an exemplary data structure of a presence log for storing calendar entries, in accordance with embodiments of the present invention;
FIGURE 4 illustrates an exemplary calendar view displaying logged presence information;
FIGURE 5 illustrates an exemplary message flow for logging presence information of presentities in a calendar system and providing the logged presence information to calendar clients, in accordance with embodiments of the present invention; and
FIGURE 6 is a flowchart illustrating an exemplary process for logging presence information of presentities in a calendar system, in accordance with embodiments of the present invention.

### DETAILED DESCRIPTION OF THE DRAWINGS

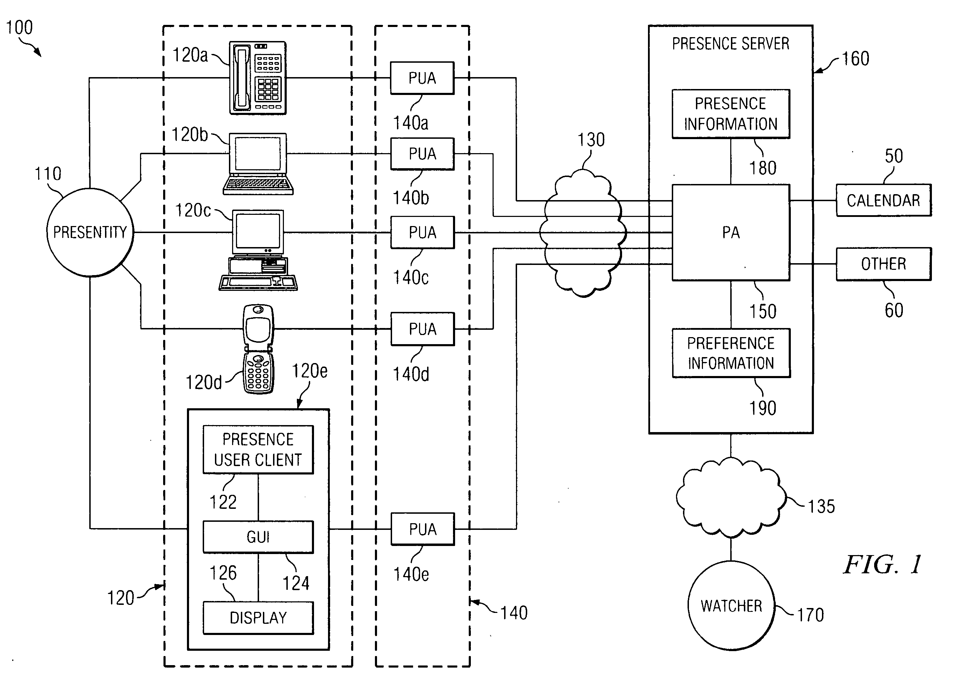

Referring to FIGURE 1, there is illustrated an exemplary presence system 100 capable of implementing various embodiments of the present invention. The presence system 100 includes one or more presentites (one of which is shown for convenience) 110, one or more presence user agents (PUAs) 140, a presence agent 150, a presence server 160 and one or more watchers 170 (one of which is shown for convenience) of the presentity 110. Examples of presentities 110 and watchers 170 include, but are not limited to, a person (e.g., user, administrator, manager or personnel), a service (e.g., software application or data), a piece of equipment (e.g., computer, fax machine or copy machine) and a facility (e.g., a room, an office or a building).

The presentity 110 provides presence information indicating the presentity's presence state to the presence system 100 via the presence user agents (PUAs) 140 associated with the presentity 110. In an exemplary embodiment, each of the PUAs 140 interfaces with a respective terminal 120 to provide a portion of the presence information 180 of the presentity 110 to the presence system 100. In FIGURE 1, each terminal 120 represents a user-operated physical communications device capable of sending and/or receiving communications over a communications network 130. Examples of such terminals 120 include, but are not limited to, a desktop phone 120a, a laptop computer 120b, a personal computer 120c, a cell phone 120d and other user-operated communication devices (e.g., PDA) 120e. Thus, as shown in FIGURE 1, each PUA 140 receives presence information either directly from a terminal 120 or through a system with knowledge of the presence state associated with the terminal 120.

In one embodiment, the PUA 140 is included within the terminal 120 itself to enable the presentity 110 to generate presence information on the terminal 120 and/or display the presentity presence information on the terminal 120. For example, a terminal (e.g., terminal 120e) can include a graphical user interface 124 for displaying the real-time presence information on a display 126 of the terminal 120e in the form of icons and/or text strings. In addition, the graphical user interface 124 may also include buttons that enable the presentity 110 to invoke an action, such as updating the presence information 180 of the presentity 110.

However, in general, each PUA 140 represents an application that independently generates a component of the overall presence information for a presentity 110. That presence information component can be associated with a terminal 120 (as illustrated in FIGURE 1) or with another application (e.g., a service or facility) or device (e.g., printer or fax machine) associated with the presentity 110. For example, in an exemplary embodiment, the PUAs 140 are applications (e.g., software programs) running on one or more physical communication devices, such as a user-operated terminal 120 (e.g., a desktop phone 120a, a laptop computer 120b, a personal computer 120c or a cell phone 120d), a computer network server, a telephony server (e.g., a circuit switch, IP router, gateway, etc.), a web server or any other networked device (e.g., printer, fax machine, etc.).

Thus, in general, each PUA 140 includes any hardware, software, firmware, or combination thereof for providing presence information to the presence system 100. As an example, each PUA 140 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

Typically, a PUA 140 generates presence information when a change in presence state occurs. Examples of changes in presence state include, but are not limited to, turning on and off a terminal 120, modifying the registration from a terminal 120, changing the instant messaging status on a terminal 120, operating a piece of equipment (e.g., sending a fax, receiving a fax, queuing a print job to a printer, etc.) and requesting or initiating a service (e.g., ordering room service, initiating Internet access, activating voice mail, etc.). As an example, when a presentity initiates or answers a phone call on a terminal 120, the PUA 140 associated with the terminal 120 notifies the presence server to set the presentity's presence state to "On the Phone."

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110.

In addition, the PA 150 collects presence information from one or more calendar/scheduler applications 50 (e.g., Microsoft Exchange Server®, IBM Lotus Notes®, Meeting Maker® or other similar application) and other sources 60 of presence information (e.g., an instant messaging application). For example, if a presentity has a meeting scheduled on his or her calendar from 10:00 a.m. to 12:00 p.m., at 10:00 a.m., the calendar/scheduler application 50 notifies the PA 150 to set the presentity's presence status to "In a Meeting."

The PA 150 aggregates the presence information from each of the sources (e.g., PUA's 140, calendar 50 and other sources 60) and maintains the current complete presence information for the presentity 110. The presence information 180 indicates, for example, the availability of the presentity, the current activity of the presentity, the local time where the presentity is located, the current location of the presentity, the current status of the active terminals and/or applications running on active terminals and the current status of any services associated with the presentity.

The PA 150 is further operable to provide the presence information 180 to one or more watchers 170 who have subscribed to the presence service of the presentity 110 via a communication network 135. In an exemplary embodiment, the presence information 180 of the presentity 110 is presented to a watcher 170 on a watcher terminal. For example, the watcher terminal can be similar to terminal 120e, and include a presence user client, graphical user interface and display.

In FIGURE 1, the communications networks 130 and 135 represent any type of network over which media (e.g., circuit-switched or packet-switched voice or data) may be sent. For example, the communications networks 130. and 135 can include the Public Switched Telephone Network (PSTN), Public Land Mobile Network (PLMN), one or more private local area networks (LANs), the Internet and/or any other type or combination of networks.

The presence server 160 is a physical entity that can operate as either the PA 150 or as a proxy server for routing requests from watchers 170 to the PA 150. The presence server 160 stores the presence information 180 for a plurality of presentities 110. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence server 160 further stores preference information 190 for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, viewing requirements, administrator policies and security considerations.

The presence system 100 uses a presence protocol to provide the presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a watcher 170 to transmit a SUBSCRIBE request for presence information relating to a particular presentity 110 to the presence server 160 that maintains the presence information for the presentity 110. In operation, the presence server 160 and PA 150 may be co-located with the SIP proxy/registrar for efficiency purposes.

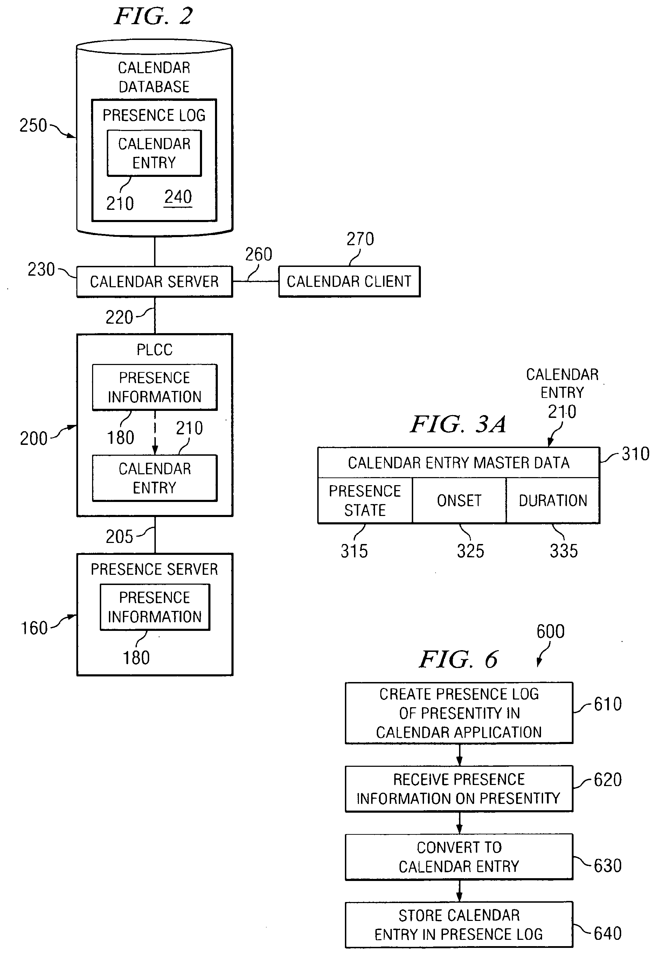

FIGURE 2 provides an exemplary architecture for logging presence information of presentities in a calendar system, in accordance with embodiments of the present invention. The architecture includes a presence server 160, a presence logging calendar connector 200, a calendar server 230 and a calendar database 250. The presence logging calendar connector 200 communicates with the calendar server 230 using a first protocol 220 (i.e., a calendar protocol), and communicates with the presence server 160 using a second protocol 205 (i.e., a presence protocol). For example, in one embodiment, the first protocol 220 is a proprietary API and/or protocol or a standard protocol associated with the calendar server 230 (e.g., Exchange Webdav), and the second protocol 205 is SIP/SIMPLE and/or another standard presence protocol.

The calendar server 230 is associated with a calendar application, such as Microsoft Outlook® or Meeting Maker®, which provides a calendar service to one or more users. The calendar server 230 communicates with the calendar database 250 to maintain calendar information representing the schedules of the users. In addition, in accordance with embodiments of the present invention, the calendar database 250 further maintains a presence log 240 for one or more of the users. The presence 240 log is populated with calendar entries 210 generated in response to presence information 180 associated with one or more of the users. Thus, one or more of the users of the calendar application are presentities within the presence system for which the presence server 160 maintains presence information 180. A separate presence log 240 can be maintained for each presentity or a single presence log 140 can include the presence information of multiple presentities.

In operation, when the presence server 160 receives updated presence information 180 for a particular presentity for whom presence logging is desired, the presence server 160 provides the received presence information 180 to the presence logging calendar connector 200. The presence logging calendar connector 200 operates to convert the presence information 180 into a calendar entry 210, and provides the calendar entry 210 to the calendar server 230 for storage in the presence log 240 within the calendar database 250. Thus, the presence logging calendar connector 200 converts between a presence format (e.g., a SIP/SIMPLE format) and a calendar format (e.g., a proprietary format) to enable presence information 180 to be stored and logged in the calendar system.

The presence information 180 sent from the presence server 160 to the presence logging calendar connector 200 identifies a presence state of a particular presentity. The presence state may correspond to a communication state or any other state that is appropriate to monitor and log for the presentity. For example, when a presentity initiates or answers a phone call, the presence server is notified, sets the presentity's presence state to "On the Phone" and provides this presence state to the presence logging calendar connector 200. As a further example, when a presentity orders room service, the presence server is notified of the order, sets the presence state of the presentity to "Order Placed" and provides this presence state to the presence logging calendar connector 200.

Thus, each time the presence server 160 receives updated presence information for a presentity whose presence information is to be logged in the calendar system, the presence server 160 provides the received updated presence information to the presence logging calendar connector 200 for conversion to a respective calendar entry 210 and storage of that calendar entry 210 in the presence log 240 associated with that presentity. Over time, the calendar entries 210 stored in the presence log 240 for a particular presentity collectively form a time log of the presence states of that presentity.

In general, the presence logging calendar connector 200 includes any hardware, software, firmware, or combination thereof for converting presence information 180 into calendar entries 210, for storing the calendar entries 210 in the presence log 240, for managing the calendar entries 210 and for interfacing between the calendar server 230 and the presence server 160. As an example, the presence logging calendar connector 200 can include one or more processors that execute instructions and one or more memories that store instructions and data used by the processors. A processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. As another example, the presence logging calendar connector 200 can include one or more processes, such as software applications providing an activity, a function, or a systematic sequence of tasks that produces a specified result.

In one embodiment, the presence logging calendar connector 200 is included within the presence server 160. In another embodiment, the presence logging calendar connector 200 is a stand-alone system capable of accessing the presence server 160 and the calendar server 230. In a further embodiment, the presence logging calendar connector 200 is included within the calendar server 230.

Once the presence logging calendar connector 200 has logged one or more calendar entries 210 representing the presence state of one or more presentities into the presence log 240 of the calendar database 250, the calendar server 230 can make the presence log 240 available to authorized users of the calendar system. In an exemplary embodiment, a calendar user can access information within the presence log 240 via a calendar client 270 (e.g., Outlook) running on a user terminal that is in communication with the calendar server 230. The calendar client 270 can display the presence log information on a display of the user terminal in a calendar format. In another embodiment, a calendar user can access the presence log information via web access to the calendar server 230 (e.g., Outlook Web Access).

In one embodiment, the calendar client 270 retrieves and displays the presence log information for only a single presentity at a time. In another embodiment, the calendar client 270 simultaneously retrieves and/or displays the presence log information for multiple presentities. The presence log information of a particular presentity can be made available to all users of the calendar system, or to only specific users of the calendar system. In addition, the amount and/or type of presence log information presented to each authorized calendar user can differ based on settings of the calendar system, the presentity and/or the user receiving the presence log information.

FIGURE 3A illustrates an exemplary format of a calendar entry 210 in a presence log, in accordance with embodiments of the present invention. The calendar entry 210 generally includes calendar entry master data 310, a presence state 315, an onset 325 of the presence state and a duration 335 of the presence state. Examples of calendar entry master data 310 include, but are not limited to, a presentity/user identifier, a length of the calendar entry 210, authentication information to verify the authenticity of the calendar entry 210 and other similar master data. The presence state 315 represents the presence state included in the original presence information (e.g., "on the phone," "room service ordered," etc.), the onset 325 represents the day and time of initialization of the presence state and the duration 335 represents the amount of time for which the presence state remained the same (e.g., an actual or proposed end day/time). As an example, a calendar entry 210 may be created after the onset of a presence state, may include an expected duration and may be updated with an actual duration upon the termination of that presence state.

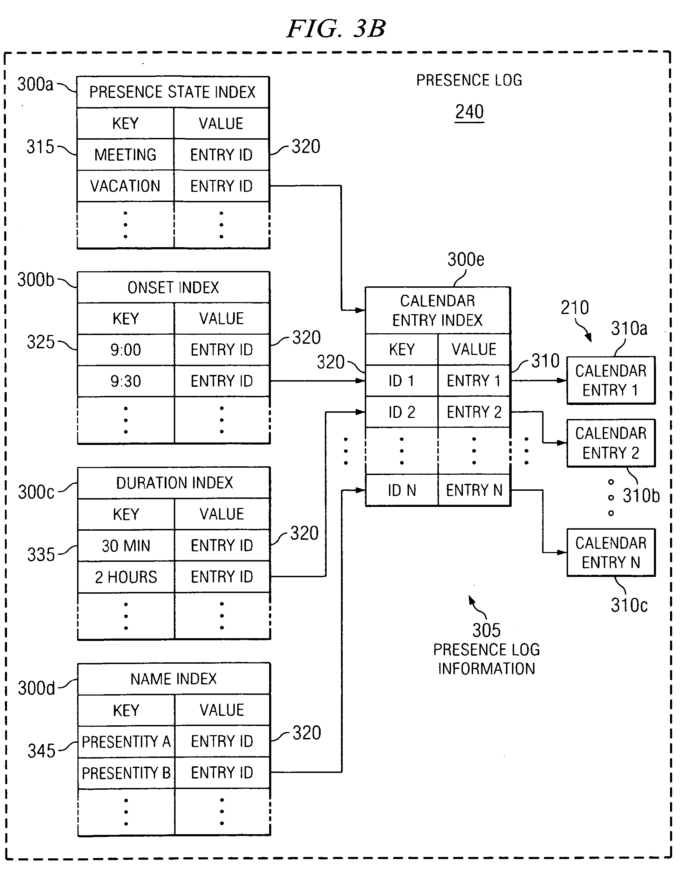

FIGURE 3B illustrates an exemplary data structure of a presence log 240 for storing calendar entries 210, in accordance with embodiments of the present invention. As described above, the calendar entries 210 for one or more presentities are stored in a presence log 240 within the calendar database. Each calendar entry 210 includes various presence-related information, such as the presence state 315, the onset 325, the duration 335 and the presentity identity 345. The presence log 240 stores the information from the calendar entries 210 as presence log information 305. The presence log information 305 can be stored in any format that enables the calendar server (200, shown in FIGURE 2) to retrieve and display the calendar entries requested by a calendar user.

An exemplary format, as shown in FIGURE 3B, stores the presence log information 305 as calendar entry objects 310a, 310b ... 310N, each including information (e.g., master data, presence state, onset, duration and/or presentity identity) on a particular one of the calendar entries 210. Each entry object 310 further has an entry identifier 320 associated therewith that uniquely identifies the entry object 310 in the presence log 240. In one embodiment, the entry identifier 320 is assigned by the presence logging calendar connector (200, shown in FIGURE 2) upon the initial receipt of the presence information. Thereafter, the presence logging calendar connector associates all updates to the entry information with the previously assigned entry identifier 320.

In addition, in FIGURE 3B, the presence log 240 is built in the form of indexes 300a-300e, each associating a particular type of presence log information 305 with an entry identifier 320. Each index 300a-300e is used to enable viewing of one or more calendar entries 210 by calendar users. For example, presence state index 300a associates presence states 315 with entry identifiers 320, onset index 300b associates presence state start times 325 with entry identifiers 320, duration index 300c associates presence state durations or presence state end times 335 with entry identifiers 320 and name index 300d associates a user/presentity identity 345 with entry identifiers 320.

By indexing on, for example, presence states 315, the calendar server is able to obtain all of the entry identifiers 320 for a particular presence state. From the entry identifiers 320, the calendar server can index on and locate the actual entry objects 310 using the entry index 300e and display the presence log information 305 associated with the retrieved entry objects 310 to the calendar user (e.g., via a calendar client or web access). Likewise, by indexing on onset times 325, the calendar server is able to obtain the entry identifiers 320 for all presence states that start at a particular time. Similarly, by indexing on duration times 335, the calendar server is able to obtain the entry identifiers 320 for all presence states that end at a particular time. Moreover, by indexing on a particular user/presentity identity 345, the calendar server is able to obtain the entry identifiers 320 for all entries associated with that user/presentity. The number and type of indexes is variable, and is not limited to any of the index types listed herein.

The presence log information 305 stored in the presence log 240 is used by the calendar server (200, shown in FIGURE 2) to create a calendar view for a calendar user containing one or more of the stored calendar entries. In an exemplary embodiment, in the calendar view, the presence state 315 maps to a calendar entry subject, the onset 325 maps to a beginning date/time for the calendar entry and the duration 335 maps to an ending date/time for the calendar entry.

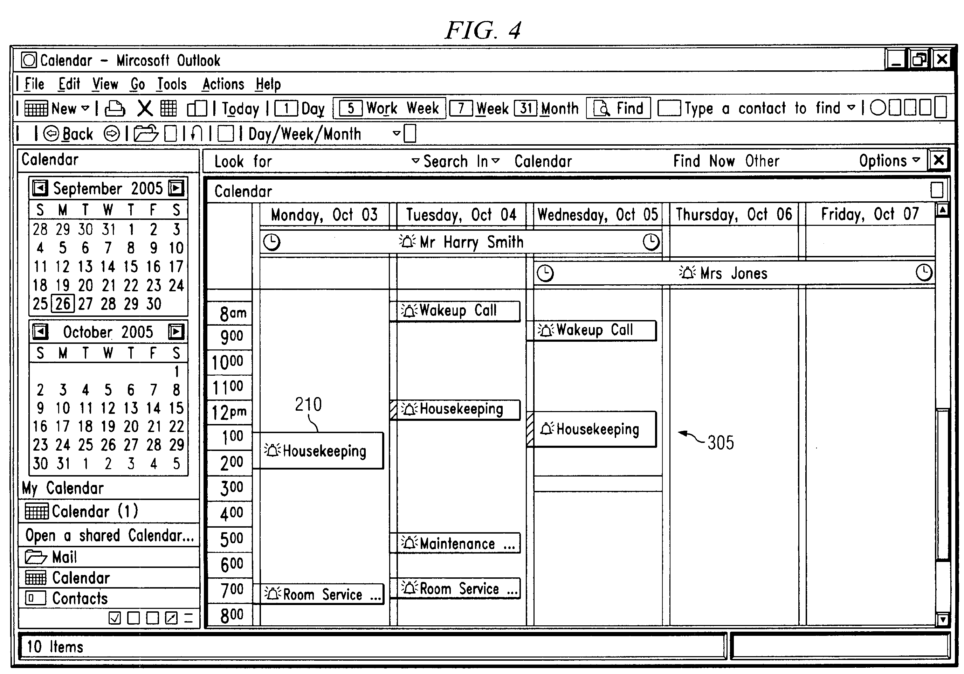

FIGURE 4 illustrates an exemplary calendar view displaying logged presence information 305. The calendar view of FIGURE 4 can be presented on any type of terminal that includes a display. For example, the calendar view can be displayed by a calendar client running on the terminal or via web access to the calendar server. In FIGURE 4, the presence log information 305 of a particular presentity is displayed as a number of calendar entries 210 in a calendar format. Each calendar entry 210 indicates the presence state of the presentity at a particular time. Collectively, the calendar entries 210 form a time log or schedule of presence states of the presentity.

In the example shown in FIGURE 4, the presentity is a hotel room and each calendar entry 210 represents a presence state of the hotel room. For example, from Monday, October 3 through Wednesday, October 5, the presence state of the hotel room indicates that Mr. Harry Smith occupied the hotel room, and from Wednesday, October 5 through Friday, October 7, the presence state of the hotel room indicates that Mrs. Jones occupied the hotel room. Various other presence states of the hotel room are also shown in calendar format, such as when housekeeping cleaned the room, when room service was ordered, wake-up call times for the room and maintenance dates/times for the room.

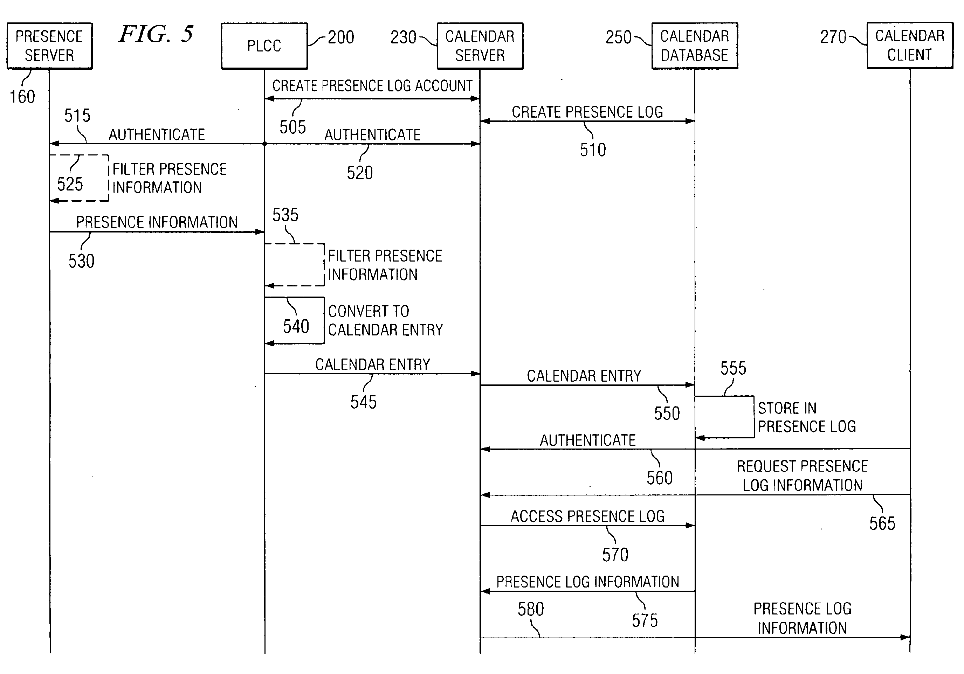

FIGURE 5 illustrates an exemplary message flow for logging presence information of presentities in a calendar system and providing the logged presence information to calendar clients, in accordance with embodiments of the present invention. Initially, at 505, the presence logging calendar connector (PLCC) 200 creates an account in the calendar server 230 for each presentity in the presence system for which logging is desired. At 510, one or more presence logs are created in the calendar database 250 to log the presence information of the presentities. At initialization or upon re-start, at 515 and 520, the PLCC 200 authenticates with both the presence server 160 and the calendar server 230. The authentication towards either or both servers 160 and 230 may be one-by-one for each presentity, or a group authentication of the PLCC 200 can be used to gain access to the information of a group of presentities.

Once authenticated, in one embodiment, the presence server 160 filters the presence information of the presentities at 525 before providing the filtered presence information to the PLCC 200 at 530. For example, the presence server 160 may filter on certain events of interest for logging purposes, and ignore other events in order to provide to the PLCC 200 only the presence information that needs to be logged. In another embodiment, instead of the presence server 160 filtering the presence information, the PLCC 200 itself may filter the received presence information, at 535, to log only certain events of interest. In addition, at 535, the PLCC 200 may filter out any presence state noise in the presence information. For example, the PLCC 200 may be provided with a time average filter to filter out any short variations in presence state below a threshold duration.

Thereafter, at 540, the PLCC 200 operates to convert the presence information in a presence format into a calendar entry in a calendar format. At 545, the PLCC 200 provides the calendar entry to the calendar server 230. At 550 and 555, the calendar server 230 provides the calendar entry to the calendar database 250 for storage in the presence log within the calendar database 250. Once one or more calendar entries have been stored in the presence log in the calendar database 250, the calendar entries can be viewed by a calendar client 270 as presence log information in a calendar format.

In an exemplary embodiment, at 560 and 565, after a calendar client 270 authenticates with the calendar server 230, the calendar client 270 can request specific presence log information for viewing. For example, the calendar client 270 can request presence log information associated with one or more presentities, one or more presence states, one or more presence state onsets and/or one or more presence state end times or durations. Upon receiving the request, at 570 and 575, the calendar server 230 accesses the calendar database 250 to index on and retrieve the requested presence log information. Thereafter, at 580, the retrieved presence log information is provided to the calendar client 270 in a calendar format for viewing and/or modification by the calendar client 270.

FIGURE 6 is a flowchart illustrating an exemplary process 600 for logging presence information of presentities in a calendar system, in accordance with embodiments of the present invention. At block 610, a presence log of a presentity is created in a calendar application, such as Microsoft Outlook® or Meeting Maker®. Thereafter, when presence information on the presentity is received at block 620, the presence information is converted from a presence format into a calendar format to produce a calendar entry at block 630. Finally, at block 640, the calendar entry is stored within the presence log for subsequent use and/or viewing.

The following features, separately or in any combination, may also constitute advantageous embodiments of the described or claimed invention:
- The claimed and/or discribed system, wherein said presence server is further operable to filter said presence information to produce filtered presence information and to provide said filtered presence information to said presence logging calendar connector.
- The claimed and/or discribed system, wherein said presence logging calendar connector is further operable to filter said presence information to produce filtered presence information and to convert said filtered presence information to said calendar entries.
- The claimed and/or discribed method, further comprising: providing said presence log information associated with one or more of said presentities to a calendar client capable of viewing of said presence log information in said calendar format.
- The claimed and/or discribed method, wherein said converting further comprises: filtering said presence information to produce filtered presence information; and converting said filtered presence information into said calendar entries.
- The claimed and/or discribed method, wherein said creating further comprises: creating a separate presence log for each of said presentities.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A system for logging presence information (180) of presentities (110) in a calendar system, said system including a presence server (160) for collecting and storing presence information (180) on a presentity (110) and providing said presence information (180) to one or more watchers (170) of said presentity (110), said system being **characterized by**:
a presence logging calendar connector (200) operable to convert said presence information (1800 in a presence format into one or more calendar entries (210) in a calendar format, said presence logging calendar connector (200) being configured to communicate with said presence server (160) via a presence protocol to receive said presence information (180) and to communicate with a calendar server (230) within the calendar system via a calendar protocol to log said calendar entries (210) in a presence log (240) maintained by said calendar server (230).

2. The system of Claim 1, wherein said presence information (180) identifies presence states (315) of said presentity (110), and wherein said calendar entries (210) collectively form a time log of said presence states.

3. The system of Claim 2, wherein each of said calendar entries (210) includes a respective one of said presence states (315), an onset (325) of said respective presence state and a duration (335) of said respective presence state.

4. The system of Claim 3, further comprising:
a calendar database (250) in communication with said calendar server (230) for storing said presence log (240), and wherein said presence log (240) contains presence log information (305), said presence log information (305) including a respective entry identifier (320), a presence state value (315), an onset value (325) and a duration value (335) for each of said calendar entries (210) and indexes (300) linking each of said entry identifiers (320) to said respective presence state value (315), said respective onset value (325) and said respective duration value (335).

5. The system of Claim 4, wherein said presence log information (305) further includes presentity identities (345) identifying each presentity (110) associated with each said respective calendar entry (210) and indexes (300) linking said entry identifiers (320) to said respective presentity identities (345).

6. The system of Claim 5, further comprising:
a calendar client (270) in communication with said calendar server (230) to retrieve said presence log information (305) associated with one or more of said presentities (110) to enable viewing of said presence log information (305) in said calendar format.

7. A method for logging presence information of presentities in a calendar system, **characterized by**:
creating (610) a presence log (240) for presentities (110) in the calendar system;
receiving (620) presence information (180) on said presentities (110);
converting (630) said presence information (180) in a presence format into one or more calendar entries (210) in a calendar format; and
storing (640) said calendar entries (210) in said presence log (240).

8. The method of Claim 7, wherein said presence information (180) identifies respective presence states (315) of each of said presentities (110), and wherein said calendar entries (210) associated with said one of said presentities (110) collectively form a time log of said presence states (315) for said one of said presentities (110).

9. The method of Claim 8, wherein said converting (630) further comprises:
for each of said calendar entries (210), including a respective one of said presence states (315), an onset (325) of said respective presence state and a duration (335) of said respective presence state; and wherein said storing (640) further comprises:
storing said calendar entries (210) as presence log information (305), said presence log information (305) including a respective entry identifier (320), a presence state value (315), an onset value (325) and a duration value (335) for each of said calendar entries (210); and
linking each of said entry identifiers (320) to said respective presence state value (315), said respective onset value (325) and said respective duration value (335).

10. The method of Claim 8, wherein said storing (640) said calendar entries (210) as said presence log information (305) further comprises:
storing presentity identities (345) identifying said presentities (110) associated with each of said calendar entries (210); and
linking said entry identifiers (320) to said respective presentity identities (345).
